# EUROPEAN PATENT SPECIFICATION

(11) **EP 1 326 350 B1**
(45) Date of publication and mention of the grant of the patent: **13.05.2009**
(21) Application number: 03000117.6
(22) Date of filing: 02.01.2003
(51) Int. Cl.: H04B 7/005

(54) **Method for controlling power of HS-SCCH in mobile communication system**
Sendeleistungsregelungsverfahren für HS-SCCH-Kanal in einem Mobilkommunikationssystem
Procédé de commande de puissance de transmission pour HS-SCCH canal dans un systeme de communication mobile

(30) Priority: 05.01.2002 KR 2002000629
(43) Date of publication of application: 09.07.2003
(73) Proprietor: LG ELECTRONICS INC., Seoul (KR)
(72) Inventor: Lee, Young Dae, Hanam, Kyungki-Do (KR); Kim, Bong Hoe, Ansan, Kyungki-Do (KR); Hwang, Seung Hoon, Socho-Gu, Seoul (KR)
(74) Representative: TER MEER - STEINMEISTER & PARTNER GbR

(56) References cited:
- EP-A- 1 089 458
- EP-A- 1 313 231
- EP-A- 1 313 334
- MOTOROLA: "CONTROL CHANNEL STRUCTURE FOR HIGH SPEED DSCH (HS-DSCH)" TSGR1/R2-12A010021, XX, XX, 5 April 2001 (2001-04-05), pages 1-5, XP002206396
- LUCENT TECHNOLOGIES: "Text Proposal for the HSDPA Technical Report" TSGR1#17(00)1384, 21 November 2000 (2000-11-21), XP002175651 Retrieved from the Internet: <URL:http://www.3gpp.org/ftp/tsg_ran/WG1_R L1/TSGR1_17/Docs/PDFs/R1-00-1384.pd> [retrieved on 2001-08-23]

## Description

### BACKGROUND OF THE INVENTION

### 1. Field of the Invention

The present invention relates to a high speed downlink packet access (HSDPA) and, more particularly, to a power control method of shared control channel for high speed downlink shared channel (HS-SCCH).

### 2. Description of the Background Art

In general, a wireless system of third generation partnership project (3GPP) proposes a new high speed downlink shared channel (HS-DSCH) in order to support a high speed packet data service. The HS-DSCH is used in a system following a Release 5 which specifies a high speed downlink packet access (HSDPA) among the technical specifications of 3GPP.

Unlike a W-CDMA system of the existing 3GPP Release 99/Release 4, the HS-DSCH uses a short transmission time interval (TTI) (3 slot, 2 ms). Thus, the HS-DSCH has been devised to transmit a high speed user data to different users every 2ms sub-frame, and uses diverse modulation code sets (MCS) in order to support a high data rate.

In order for a user equipment (UE) to receive a user data, a shared control channel for HS-DSCH (HS-SCCH) and a dedicated physical channel (DPCH) should be constructed.

The HS-SCCH, a physical channel, is a type of a downlink common control channel to support the HS-DSCH. HS-SCCH is used to transmit a UE ID-related control information so that the UE can receive the HS-DSCH transmitting a high speed user data. The user equipment monitors HS-SCCH to recognize whether there is a data to be received by itself and receives a user data transmitted through HS-DSCH by using the UE ID-related control information. At this time, the UE ID-related control information is transmitted through each frame (2ms) of HS-SCCH. The UE ID-related control information is generated by a node B (a base station) to which a cell transmitting HS-DSCH belongs, and transmitted to the UE through HS-SCCH.

The control information transmitted through HS-SCCH is roughly divided into transport format and resource related information (TFRI) and HARQ related information. The TFRI includes a channelization code set during a HS-DSCH TTI, a modulation scheme, a transport block set size + a transport channel identity. The HARQ related information includes a block number, a redundancy version or the like. In addition, a UE ID (identification) is transmitted through HS-SCCH.

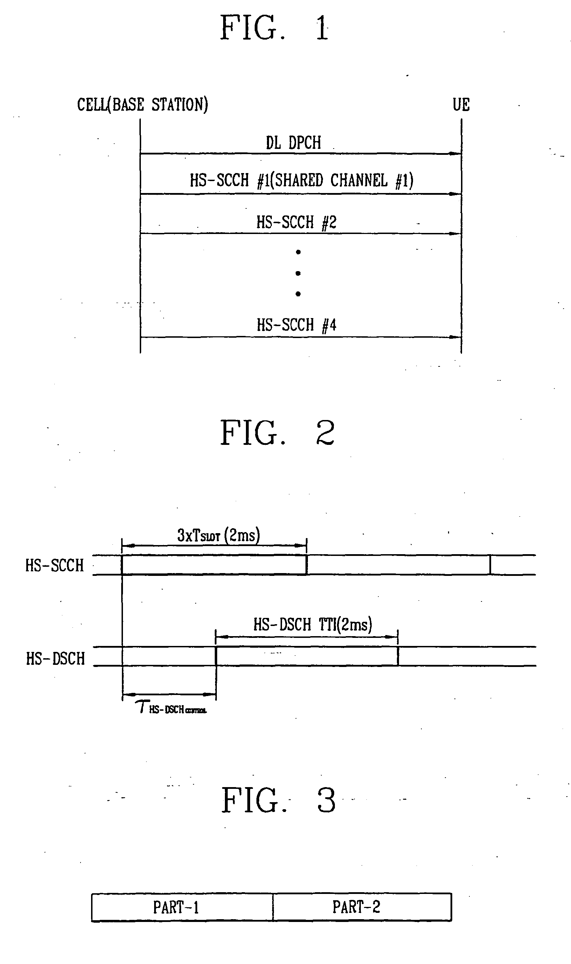

As a downlink channel required for one UE for transmission of one HSDPA, there are an associated DPCH, HS-SCCH and HS-DSCH and the like. The UMTS radio access network (UTRAN) may configures a plurality of HS-SCCHs in one cell, but as shown in Figure 1, four HS-SCCHs at the maximum can be allocated to one UE.

Figure 2 illustrates a transport timing of HS-SCCH and HS-DSCH.

As shown in Figure 2, a downlink (DL) DPCH is first transmitted, control information is transmitted through HS-SCCH, and then a data is transmitted through HS-DSCH. The UE recovers HS-DSCH data by using the control information transmitted through HS-SCCH.

As aforementioned, in case that a high speed user data is provided to different users through HS-DSCH proposed in the HSDPA technique, at least one or more HS-SCCHs are configured n one cell. Especially, if there are many HSDPA terminals, a plurality of HS-SCCH should be configured in one cell for an effective data service.

Figure 3 illustrates a construction of the control information transmitted through HS-SCCH.

As shown in Figure 3, the control information of HS-SCCH is divided into a part-1 transmitting a common content and a part-2 transmitting information for a particular UE. The part-1 contains the channelization code set of TFRI and a modulation scheme, while the part-2 contains the transport block set size of TFRI, the transport channel identity and HARQ-related information.

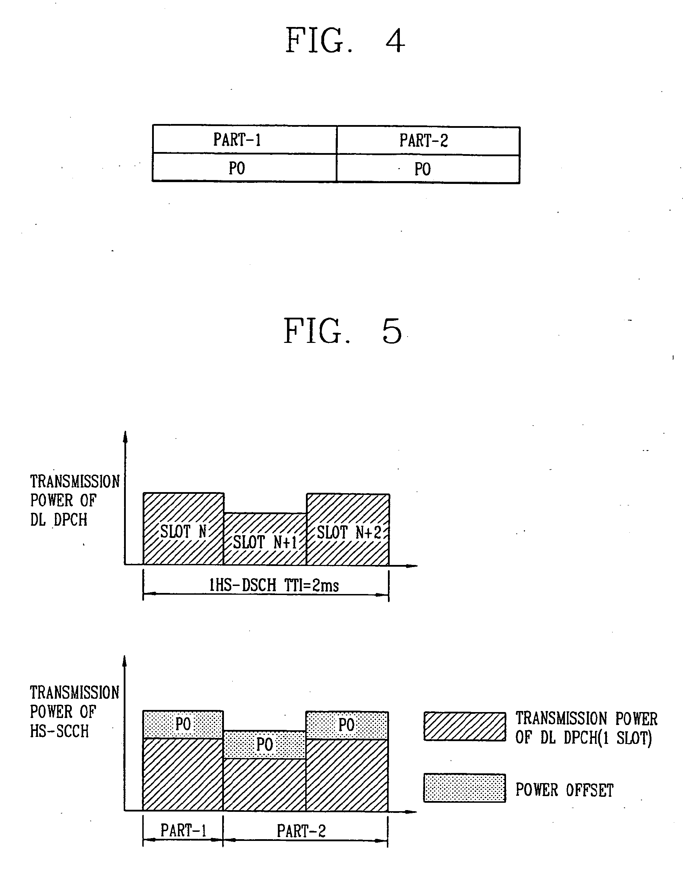

Figure 4 is a conceptual view of a method of controlling transmission power of HS-SCCH.

In the conventional art, the part-1 and part-2 transmission power for HS-SCCH are controlled by the same power control method or the same power offset.

For example, as shown in Figure 5, the transmission power of each slot for part-1 and part-2 is determined as a power offset relative to the transmission power of each slot for DL DPCH. The power offset value (PO) is the same for both part-1 and part-2.

The PO value may change according to a channel environment. For instance, if an associated DPCH is in soft handover, a pre-set PO value is changed to a different PO value.

As mentioned above, in the conventional method, the same power control method is applied to both part-1 and part 2 constituting a HS-SCCH sub-frame.

Thus, since the part-1 transmitting the common content and the part-2 transmitting information for a particular UE are subjected to the same power control method, an inter-cell interference is increased and a node B power is ineffectively used.

The article "CONTROL CHANNEL STRUCTURE FOR HIGH SPEED DSCH (HS-DSCH", Motorola, TSGR1/R1/R2-12A010021, 5 April 2001 (2001-04-05) describes an uplink and downlink control channel structure for a high speed downlink shared channel, HS-DSCH.

The text proposal for the HSDPA Technical Report from Lucent Technologies, TSGR1#17(00)1384, 21 November 2000 (2000-11-21), XP002175651 describes high speed downlink shared channel, wherein the power and code broadcast channels are defined.

EP 1 313 231 A2 describes a method for controlling transmission power of HS-SCCH in UMTS system wherein the transmission power of a shared control channel for high speed downlink shared channel is controlled by using the DPCCH channel configured in each UE. The power of each sub-frame suitably for each user equipment is transmitted wherein the suitable transmission power of the HS-SCCH is set according to whether it is in soft handover and whether it is a primary cell in soft handover.

EP 1 313 334 A2 describes a power control for HS-SDCH in a mobile communication system wherein power offset value for power control of the HS-SCCH is determined by a SRNC and transmitted as a control frame or message type to a base station.

### SUMMARY OF THE INVENTION

Therefore, an object of the present invention is to provide a method for controlling transmission power of HS-SCCH that is capable of controlling power of HS-SCCH.

Another object of the present invention is to provide a method for controlling transmission power of HS-SCCH that is capable of reducing an inter-cell interference and effectively using power of a node B by applying a differential power control to a part-1 and a part-2.

Still another object of the present invention is to provide a method for controlling transmission power of HS-SCCH using a DL DPCH and a common pilot channel (CPICH).

Yet another object of the present invention is to provide a method for controlling transmission power of HS-SCCH that is capable of constantly maintaining transmission power of HS-SCCH during a sub-frame.

The objects are solved by the features of the independent claims.

To achieve at least the above objects in whole or in parts, there is provided a method for controlling transmission power of HS-SCCH which transmits control information of a sub-frame divided into a part-1 and a part-2, wherein transmission power of part-1 and part-2 is determined to be different according to a power control command of a UE.

In the method for controlling transmission power of HS-SCCH of the present invention, preferably, the transmission power of part-1 is determined as a power offset value for transmission power of CPICH and transmission power of part-2 is determined as a power offset value for transmission power of DL DPCH.

In the method for controlling transmission power of HS-SCCH of the present invention, preferably, the transmission power of part-1 is controlled by a first power offset (PO1) value relative to the transmission power of CPICH, and the transmission power of part-2 is controlled by a second power offset (PO2) value relative to the transmission power of a slot of DL DPCH.

In the method for controlling transmission power of HS-SCCH of the present invention, preferably, the transmission power of part-1 is determined as a value obtained by adding the first PO value to the transmission power of CPICH.

In the method for controlling transmission power of HS-SCCH of the present invention, preferably, the second PO value is a PO value relative to one of three slots of DL DPCH.

In the method for controlling transmission power of HS-SCCH of the present invention, preferably, the transmission power of each slot of part-2 is determined as the 2^{nd} power offset relative to the transmission power of the corresponding slot over DL DPCH.

In the method for controlling transmission power of HS-SCCH of the present invention, preferably, the transmission power of each slot of part-2 is determined as the 2^{nd} power offset relative to the transmission power of one of three slots of DL DPCH.

In the method for controlling transmission power of HS-SCCH of the present invention, preferably, the transmission power of each slot of part-2 is determined as the 2^{nd} power offset relative to an average transmission power of previous slots of DL DPCH.

To achieve at least these advantages in whole or in parts, there is further provided a method for controlling transmission power of HS-SCCH including the steps of; receiving a power control command or information from a UE; setting transmission power of DL DPCH and CPICH according to the received power control command; and determining transmission power of HS-SCCH transmitted to each UE by using first and second power offset (PO) values relative to the set transmission power of CPICH and DL DPCH.

In the method for controlling transmission power of HS-SCCH of the present invention, preferably, the first PO value determines transmission power of part-1 transmitting a common content in HS-SCCH and second PO value determines transmission power of part-2 transmitting information for a particular UE.

In the method for controlling transmission power of HS-SCCH of the present invention, preferably, transmission power of part-1 is determined as a value obtained by adding the first PO value to the transmission power of CPICH and the second PO value is a power offset value relative to one of three slots of DL DPCH.

In the method for controlling transmission power of HS-SCCH of the present invention, preferably, the transmission power of part-2 is determined by adding the second PO value to transmission power of slots corresponding to DL DPCH.

In the method for controlling transmission power of HS-SCCH of the present invention, preferably, the transmission power of part-2 is determined by adding the second PO value to the transmission power of one of three slots of DL DPCH, or by adding the second PO value to an average transmission power of DL DPCH during a certain slot.

To achieve at least these advantages in whole or in parts, there is further provided a method for controlling transmission power of HS-SCCH in a high speed data packet access (HSDPA) service of a UMTS system in which a UE receives a user data through a high speed downlink shared channel (HS-DSCH) on the basis of control information transmitted through HS-SCCH from a node B, wherein transmission power of a part-1 and a part-2 constituting a sub-frame of HS-SCCH is controlled to be different so as to be suitable to each UE based on power control of CPICH common to all UEs and power control of DL DPCH dedicated to a UE.

In the method for controlling transmission power of HS-SCCH of the present invention, preferably, the transmission power of part-1 is determined as a power offset for the transmission power of common pilot channel (CPICH), and the transmission power of part-2 is determined as a power offset for the transmission power of DL DPCH.

In the method for controlling transmission power of HS-SCCH of the present invention, preferably, the transmission power of part-1 is controlled by a first power offset (PO) value relative to the transmission power of CPICH, and the transmission power of part-2 is controlled by a second power offset (PO) value relative to each slot of DL DPCH.

In the method for controlling transmission power of HS-SCCH of the present invention, preferably, the transmission power of part-1 is determined by adding the first PO value to the transmission power of CPICH, and the second PO value is a power offset value relative to one of three slots of DL DPCH.

In the method for controlling transmission power of HS-SCCH of the present invention, preferably, the transmission power of part-2 is determined by adding the second PO value to the transmission power of slots corresponding to DL DPCH.

In the method for controlling transmission power of HS-SCCH of the present invention, preferably, the transmission power of part-2 is determined by adding the second PO value to the transmission power of one of three slots of DL DPCH, or by adding the second PO value to an average transmission power of DL DPCH during a certain slot.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

### BRIEF DESCRIPTION OF THE DRAWINGS

The invention will be described in detail with reference to the following drawings in which like reference numerals refer to like elements wherein:
Figure 1 illustrates a signaling of HS-SCCH for transmitting control information;
Figure 2 illustrates a transport timing of HS-SCCH and HS-DSCH;
Figure 3 illustrates a construction of the control information transmitted through HS0SCCH for 2ms (1 TTI);
Figure 4 is a conceptual view of a method for controlling transmission power of HS-SCCH in accordance with a conventional art;
Figure 5 illustrates one example of a method for controlling transmission power of HS-SCCH of Figure 4;
Figure 6 is a conceptual view of a method for controlling transmission power of HS-SCCH in accordance with one embodiment of the present invention;
Figure 7 illustrates one method of controlling transmission power of HS-SCCH implemented according to the concept of Figure 6;
Figure 8 illustrates another method of controlling transmission power of HS-SCCH implemented by the concept of Figure 6; and
Figure 9 illustrates a method for controlling transmission power of HS-SCCH in accordance with another embodiment of the present invention.

### DETAILED DESCRIPTION OF THE PREFERRED EMBODIMENTS

A power offset (PO) value for power control of HS-SCCH is generated by an RNC and sent to the node B. Then, the node B applies a different transmission power control method to a part-1 and a part02 of HS-SCCH on the basis of the received PO value.

Thus, when the node B receives a transmit power control (TPC) command from a UE, it differentially controls transmission power of part-1 and part-2 constituting a sub-frame of HS-SCCH so as to be suitable to each UE on the basis of the power control of DL DPCH constructed in each UE and power control of CPICH transmitted equally to every UE.

The method for controlling power of HS-SCCH will now be described with reference to the accompanying drawings.

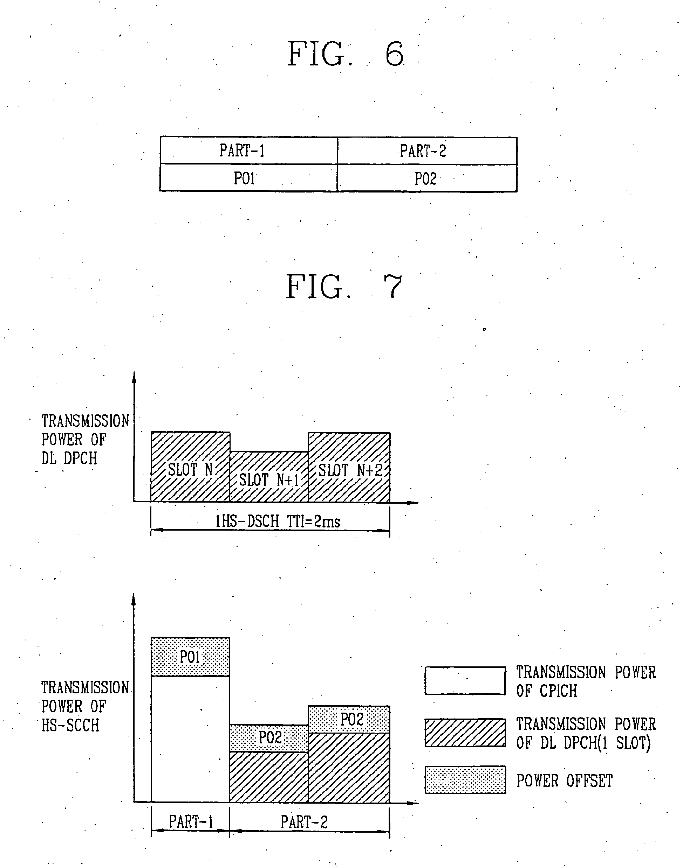

Figure 6 is a conceptual view of a method for controlling transmission power of HS-SCCH in accordance with one embodiment of the present invention.

As shown in Figure 6, in the HS-SCCH of a sub-frame, the transmission power of part-1 and part-2 is independently controlled by the first and the second PO values PO1 and PO2. The first PO value (PO1) is defined as a power offset relative to transmission power of CPICH transmitted equally to every UE, and the second PO value is defined as a power offset relative to the transmission power of DL DPCH transmitted differently to each UE.

Therefore, the transmission power of part-1 is transmitted as a high power so that every UE can receive it, while the transmission power of part-2 is transmitted as a suitable power receivable by a particular UE.

The first and the second PO values (P01 and P02) can change according to a channel environment. For instance, as shown in Figure 7, if DL DPCH is in soft handover, new first an second values (P01 and P02) different from the previous values can be used.

In addition, different first and second PO values (P01 and P02) can be used according to whether a cell transmitting HS-SCCH in a 3GPP WCDMA adopting a site selection diversity transmit (SSDT) technique is primary or non-primary.

Using SSDT cell ID transmitted by UE, the node B determines power offset based on whether DPCH is in soft handover or not, and/or whether a cell is primary or not in case of soft handover. For this purpose, the RNC may send first and second PO values according to whether DL DPCH is in soft handover and/or first and second PO values according to whether cell transmitting HS-SCCH is primary or not, to the node B.

Figure 7 illustrates one method of controlling transmission power of HS-SCCH implemented according to the concept of Figure 6.

As shown in Figure 7, the first PO value (PO1) is defined as a PO value relative to the transmission power of CPICH, and the second PO value (PO2) is determined as a PO value relative to each slot of associated DPCH.

Thus, transmission power of part-1 is determined as a value obtained by adding the transmission power of CPICH and the first PO value (PO1) and the transmission power of part-2 is determined as a value obtained by adding transmission power of each slot (N+1th and N+2^{nd}) of DL DPCH which is inner loop power controlled in each slot and the second PO value (P02). At this time, the transmission power of part-2 of HS-SCCH for first TTI may change in each slot.

If the second PO value (PO2) of part-2 is defined as a power offset relative to each slot of DL DPCH, the second PO value (PO2) can be set to be different according to transmission power of each slot.

For instance, the second PO value (PO2) can be set as a power offset relative to one of three slots of associated DPCH during a HS-DSCH TTI 2 ms. Accordingly, transmission power of part-2 is determined by adding the transmission power of a particular slot of DL DPCH for 1 TTI and the second PO value (P02). In addition, transmission power of part-2 can be determined by adding an average transmission power of DL DPCH during a certain slot in the past and the second PO value (P02).

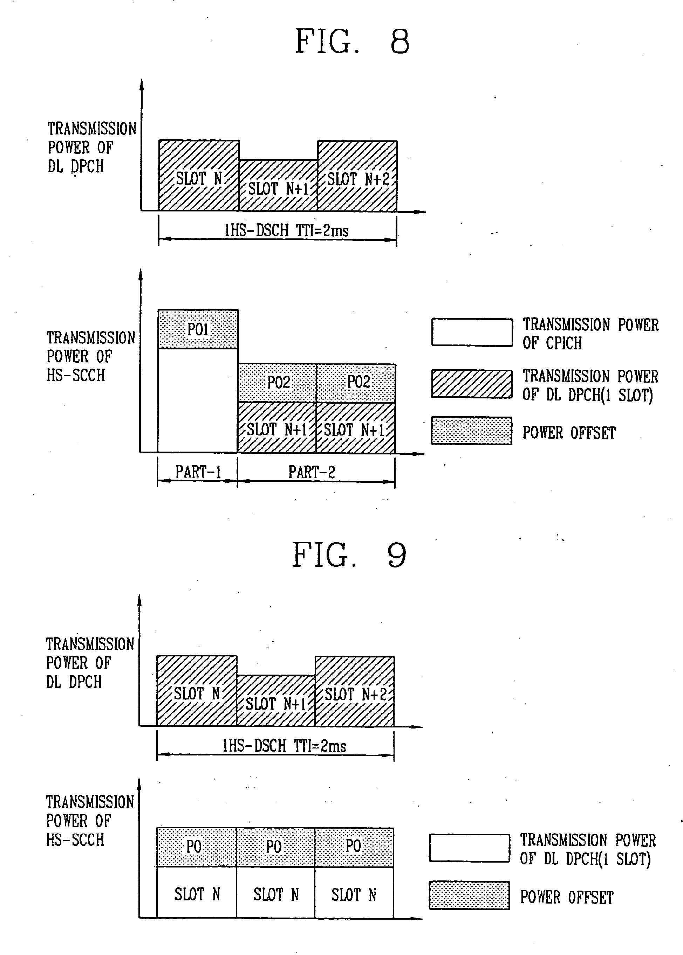

Figure 8 illustrates another method of controlling transmission power of HS-SCCH implemented by the concept of Figure 6, showing a method for determining transmission power of part-2 by using transmission power of the second slot (N+1) of DL DPCH.

As shown in Figure 8, the second PO value (PO2) of part-2 is set as a power offset relative to the second slot (N+1) of three slots (N, N+1 and N+2) of DL DPCH, and the transmission power of part-2 is determined as a value obtained by adding the transmission power of the second slot of DL DPCH and the second PO value (P02).

Figure 9 illustrates a method for controlling transmission power of HS-SCCH in accordance with another embodiment of the present invention.

As shown in Figure 9, the power control is equally performed on each slot of HS-SCCH during a sub-frame, so that the controlling can be performed in the unit of slot adopting the second channel coding method and there is no change in the transmission power of HS-SCCH during 1 TTI (2ms). At this time, the transmission power for the three slots is uniformly applied on the basis of transmission power of one of the three slots of DL DPCH. Preferably, the reference slot is the first slot.

That is, the PO value is determined as a power offset relative to the transmission power of the first slot (N0 of DL DPCH. Therefore, the transmission power of HS-SCCH is determined as a value obtained by adding the PO value to the transmission power of the first slot (N0 of DL DPCH.

Otherwise, the transmission power of HS-SCCH during 1 TTI can be determined by adding the PO to an average transmission power of DL DPCH during a certain slot in the past.

As so far described, the method for controlling power of HS-SCCH of the present invention has the following advantages.

That is, since the transmission power of HS-SCCH is controlled by differentiating part-1 and part-2, the inter-cell interference is minimized and the power of the node B can be effectively used.

In addition, by constantly controlling the power to part-2 of HS-SCCH transmitted to a particular user or by constantly controlling transmission power of every slot of HS-SCCH, the efficiency in power control can be heightened in case of failing to control power in each slot.

## Claims

1. A method for controlling transmission power of a high speed shared control channel, HS-SCCH, in a high speed data packet access, HSDPA, service of a universal mobile telecommunications system, UMTS, system in which a user equipment, UE, receives a user data through a high speed downlink shared channel, HS-DSCH, on the basis of control information transmitted through the HS-SCCH, **characterized in that** transmission power of a first part and a second part constituting a sub-frame of the HS-SCCH is controlled to be different based on a power control of common pilot channel, CPICH, common to all of UEs and a power control of downlink dedicated physical channel, DL DPCH, dedicated to a UE.

2. The method of claim 1, wherein the transmission power of the first part is determined as a power offset for the transmission power of common pilot channel, CPICH.

3. The method of claim 1, wherein the transmission power of the first part is controlled by a first power offset, PO, value relative to the transmission power of CPICH.

4. The method of claim 3, wherein the transmission power of the first part is determined by adding the first PO value to the transmission power of CPICH.

5. The method of claim 1, wherein the transmission power of the second part is determined as a power offset for the transmission power of DL DPCH.

6. The method of claim 1, wherein the transmission power of each slot of the second part is controlled by a second power offset, PO, value relative to each slot of DL DPCH.

7. The method of claim 6, wherein the second PO value is a power offset value relative to one of three slots of DL DPCH.

8. The method of claim 6, wherein the transmission power of each slot of the second part is determined by adding the second PO value to the transmission power of slots corresponding to DL DPCH.

9. The method of claim 6, wherein the transmission power of each slot of the second part is determined by adding the second PO value to the transmission power of one of three slots of DL DPCH.

10. The method of claim 6, wherein the transmission power of each slot of the second part is determined by adding the second PO value to an average transmission power of DL DPCH during a prescribed slot.

11. A method for controlling transmission power of high speed shared control channel. HS-SCCH, comprising the steps of:
- receiving a power control information from a user equipment, UE;
**characterized by**
- setting transmission power of downlink dedicated physical channel, DL DPCH, and common pilot channel, CPICH, according to the received power control information; and
- controlling transmission power of a first part and a second part constituting a sub-frame of the HS-SCCH to be different based on a power control of common pilot channel, CPICH, common to all of UEs and a power control of downlink dedicated physical channel, DL DPCH, dedicated to a UE.

12. The method of claim 11, comprising: determining transmission power of HS-SCCH transmitted to each UE by using first and second power offset, PO, values relative to the set transmission power of the CPICH and DL DPCH, wherein the first PO value is related to the first part of a sub-frame of the HS-SCCH and the second PO value is related to the second part of a sub-frame of the HS-SCCH.

13. The method of claim 11, wherein the first PO value determines transmission power of the first part configured to transmit a common content in the HS-SCCH and the second PO value determines transmission power of the second part configured to transmit information for a particular UE.

14. The method of claim 12 or 13, wherein transmission power of the first part is determined as a value obtained by adding the first PO value to the transmission power of the CPICH.

15. The method of claim 11, wherein the second PO value is a power offset value relative to one of three slots of the DL DPCH.

16. The method of claim 11, wherein the transmission power of each slot of the second part is determined by adding the second PO value to transmission power of slots corresponding to the DL DPCH.

17. The method of claim 11, wherein the transmission power of each slot of the second part is determined by adding the second PO value to the transmission power of one of three slots of DL DPCH.

18. The method of claim 11, wherein the transmission power of each slot of the second part is determined by adding the second PO value to an average transmission power of DL DPCH during a certain slot.

## Patentansprüche

1. Verfahren zum Steuern der Übertragungsleistung eines gemeinsam genutzten Hochgeschwindigkeits-Steuerkanals, HS-SCCH, in einem Hochgeschwindigkeits-Datenpaket-Zugriffsdienst, HSPDA-Dienst, eines universellen mobilen Telekommunikationssystems, UMTS-Systems, in dem ein Anwendergerät, UE, Anwenderdaten über einen gemeinsam genutzten Hochgeschwindigkeits-Abwärtsstreckenkanal, HS-DSCH, auf der Grundlage von Steuerinformationen, die über den HS-SCCH übertragen werden, empfängt, **dadurch gekennzeichnet, dass** Übertragungsleistungen eines ersten Teils und eines zweiten Teils, die einen Unterrahmen des HS-SCCH bilden, anhand einer Leistungssteuerung eines gemeinsamen Pilotkanals, CPICH, der allen UEs gemeinsam ist, und anhand einer Leistungssteuerung eines dedizierten physikalischen Abwärtsstreckenkanals, DL DPCH, der für eine UE dediziert ist, so gesteuert werden, dass sie unterschiedlich sind.

2. Verfahren nach Anspruch 1, wobei die Übertragungsleistung des ersten Teils als eine Leistungsverschiebung für die Übertragungsleistung des gemeinsamen Pilotkanals, CPICH, bestimmt wird.

3. Verfahren nach Anspruch 1, wobei die Übertragungsleistung des ersten Kanals durch einen ersten Leistungsverschiebungswert, PO-Wert, relativ zu der Übertragungsleistung des CPICH gesteuert wird.

4. Verfahren nach Anspruch 3, wobei die Übertragungsleistung des ersten Teils durch Addieren des ersten PO-Werts zu der Übertragungsleistung des CPICH bestimmt wird.

5. Verfahren nach Anspruch 1, wobei die Übertragungsleistung des zweiten Teils als eine Leistungsverschiebung für die Übertragungsleistung des DL DPCH bestimmt wird.

6. Verfahren nach Anspruch 1, wobei die Übertragungsleistung jedes Zeitschlitzes des zweiten Teils durch einen zweiten Leistungsverschiebungswert, PO-Wert, relativ zu jedem Zeitschlitz des DL DPCH gesteuert wird.

7. Verfahren nach Anspruch 6, wobei der zweite PO-Wert ein Leistungsverschiebungswert relativ zu einem von drei Zeitschlitzen des DL DPCH ist.

8. Verfahren nach Anspruch 6, wobei die Übertragungsleistung jedes Zeitschlitzes des zweiten Teils durch Addieren des zweiten PO-Wertes zu der Übertragungsleistung von Zeitschlitzen, die dem DL DPCH entsprechen, bestimmt wird.

9. Verfahren nach Anspruch 6, wobei die Übertragungsleistung jedes Zeitschlitzes des zweiten Teils durch Addieren des zweiten PO-Wertes zu der Übertragungsleistung eines von drei Zeitschlitzen des DL DPCH bestimmt wird.

10. Verfahren nach Anspruch 6, wobei die Übertragungsleistung jedes Zeitschlitzes des zweiten Teils durch Addieren des zweiten PO-Werts zu einer durchschnittlichen Übertragungsleistung des DL DPCH während eines vorgeschriebenen Zeitschlitzes bestimmt wird.

11. Verfahren zum Steuern der Übertragungsleistung eines gemeinsam genutzten Hochgeschwindigkeits-Steuerkanals, HS-SCCH, das die folgenden Schritte umfasst:
- Empfangen von Leistungssteuerinformationen von einem Anwendergerät, UE;
**gekennzeichnet durch**
- Einstellen der Übertragungsleistung eines dedizierten physikalischen Abwärtsstreckenkanals, DL DPCH, und eines gemeinsamen Pilotkanals, CPICH, entsprechend den empfangenen Leistungssteuerinformationen; und
- Steuern der Übertragungsleistungen eines ersten Teils und eines zweiten Teils, die einen Unterrahmen des HS-SCCH bilden, anhand einer Leistungssteuerung des gemeinsamen Pilotkanals, CPICH, der allen UEs gemeinsam ist, und einer Leistungssteuerung des dedizierten physikalischen Abwärtsstreckenkanals, DL DPCH, der für ein UE dediziert ist, derart, dass sie unterschiedlich sind.

12. Verfahren nach Anspruch 11, das umfasst:
Bestimmen der Übertragungsleistung des HS-SCCH, die an jedes UE unter Verwendung eines ersten und eines zweiten Leistungsverschiebungswertes, PO-Wertes, relativ zu der eingestellten Übertragungsleistung des CPICH und des DL DPCH übertragen wird, wobei der erste PO-Wert mit dem ersten Teil eines Unterrahmens des HS-SCCH in Beziehung steht und der zweite PO-Wert mit dem zweiten Teil eines Unterrahmens des HS-SCCH in Beziehung steht.

13. Verfahren nach Anspruch 11, wobei der erste PO-Wert die Übertragungsleistung des ersten Teils bestimmt, der konfiguriert ist, um einen gemeinsamen Inhalt in dem HS-SCCH zu übertragen, und der zweite PO-Wert die Übertragungsleistung des zweiten Teils bestimmt, der konfiguriert ist, um Informationen für ein besonderes UE zu übertragen.

14. Verfahren nach Anspruch 12 oder 13, wobei die Übertragungsleistung des ersten Teils als ein Wert bestimmt wird, der durch Addieren des ersten PO-Werts zu der Übertragungsleistung des CPICH erhalten wird.

15. Verfahren nach Anspruch 11, wobei der zweite PO-Wert ein Leistungsverschiebungswert relativ zu einem von drei Zeitschlitzen des DL DPCH ist.

16. Verfahren nach Anspruch 11, wobei die Übertragungsleistung jedes Zeitschlitzes des zweiten Teils durch Addieren des zweiten PO-Wertes zu der Übertragungsleistung von Zeitschlitzen, die dem DL DPCH entsprechen, bestimmt wird.

17. Verfahren nach Anspruch 11, wobei die Übertragungsleistung jedes Zeitschlitzes des zweiten Teils durch Addieren des zweiten PO-Wertes zu der Übertragungsleistung eines von drei Zeitschlitzen des DL DPCH bestimmt wird.

18. Verfahren nach Anspruch 11, wobei die Übertragungsleistung jedes Zeitschlitzes des zweiten Teils durch Addieren des zweiten PO-Wertes zu einer durchschnittlichen Übertragungsleistung des DL DPCH während eines bestimmten Zeitschlitzes bestimmt wird.

## Revendications

1. Procédé pour contrôler la puissance de transmission d'un canal de contrôle partagé à haut débit, HS-SCCH, dans un service d'accès haut débit à paquets de données, HSDPA d'un système de télécommunication mobile universel, UMTS, dans lequel un équipement d'utilisateur, UE, reçoit des données d'utilisateur par l'intermédiaire d'un canal partagé à haut débit de liaison descendante, HS-DSCH, sur la base d'informations de contrôle transmises par l'intermédiaire du HS-SCCH, **caractérisé en ce qu'**on commande les puissances de transmission d'une première partie et d'une deuxième partie constituant une sous-trame du HS-SCCH de manière à être différentes, en se basant sur le contrôle de puissance d'un canal pilote commun, CPICH, commun à tous les UE et sur le contrôle de puissance d'un canal physique dédié de liaison descendante, DL DPCH, dédié à un UE.

2. Procédé selon la revendication 1, dans lequel la puissance de transmission de la première partie est déterminée sous la forme d'un décalage de puissance pour la puissance de transmission du canal pilote commun, CPICH.

3. Procédé selon la revendication 1, dans lequel la puissance de transmission de la première partie est contrôlée par une première valeur de décalage de puissance, PO, par rapport à la puissance de transmission du CPICH.

4. Procédé selon la revendication 3, dans lequel la puissance de transmission de la première partie est déterminée en additionnant la première valeur de PO avec la puissance de transmission du CPICH.

5. Procédé selon la revendication 1, dans lequel on détermine la puissance de transmission de la deuxième partie sous la forme d'un décalage de puissance pour la puissance de transmission du DL DPCH.

6. Procédé selon la revendication 1, dans lequel la puissance de transmission de chaque intervalle de temps de la deuxième partie est contrôlée par une deuxième valeur de décalage de puissance, PO, par rapport à chaque intervalle de temps du DL DPCH.

7. Procédé selon la revendication 6, dans lequel la deuxième valeur de PO est une valeur de décalage de puissance par rapport à l'un des trois intervalles de temps du DL DPCH.

8. Procédé selon la revendication 6, dans lequel la puissance de transmission de chaque intervalle de temps de la deuxième partie est déterminée en additionnant la deuxième valeur de PO avec la puissance de transmission des intervalles de temps correspondant aux DL DPCH.

9. Procédé selon la revendication 6, dans lequel la puissance de transmission de chaque intervalle de temps de la deuxième partie est déterminée en additionnant la deuxième valeur de PO avec la puissance de transmission de l'un des trois intervalles de temps du DL DPCH.

10. Procédé selon la revendication 6, dans lequel la puissance de transmission de chaque intervalle de temps de la deuxième partie est déterminée en additionnant la deuxième valeur de PO avec la puissance de transmission moyenne du DL DPCH durant un intervalle de temps prescrit.

11. Procédé pour contrôler la puissance de transmission d'un canal de contrôle partagé à haut débit, HS-SCCH, comprenant les étapes consistant à :
recevoir des informations de contrôle de puissance depuis un équipement d'utilisateur, UE ;
**caractérisé par**
la détermination de la puissance de transmission d'un canal physique dédié de liaison descendante, DL DPCH, et d'un canal pilote commun, CPICH, en fonction des informations de contrôle de puissance reçues ; et
le contrôle de la puissance de transmission d'une première partie et d'une deuxième partie constituant une sous-trame du HS-SCCH de manière à être différentes, en se basant sur le contrôle de puissance d'un canal pilote commun, CPICH, commun à tous les UE et sur le contrôle de puissance d'un canal physique dédié de liaison descendante, DL DPCH, dédié à un UE.

12. Procédé selon la revendication 11, comprenant la détermination de la puissance de transmission du HS-SCCH transmise à chaque UE en utilisant les première et deuxième valeurs de décalage de puissance, PO, par rapport à la puissance de transmission déterminée du CPICH et du DL DPCH, dans lequel la première valeur de PO concerne la première partie d'une sous-trame du HS-SCCH et la deuxième valeur de PO concerne la deuxième partie d'une sous-trame du HS-SCCH.

13. Procédé selon la revendication 11, dans lequel la première valeur de PO détermine la puissance de transmission de la première partie, configurée pour transmettre un contenu commun dans le HS-SCCH et la deuxième valeur de PO détermine la puissance de transmission de la deuxième partie configurée pour transmettre des informations pour un UE particulier.

14. Procédé selon la revendication 12 ou 13, dans lequel la puissance de transmission de la première partie est déterminée sous la forme d'une valeur obtenue en additionnant la première valeur de PO avec la puissance de transmission du CPICH.

15. Procédé selon la revendication 11, dans lequel la deuxième valeur de PO est une valeur de décalage de puissance par rapport à l'un des trois intervalles de temps du DL DPCH.

16. Procédé selon la revendication 11, dans lequel la puissance de transmission de chaque intervalle de temps de la deuxième partie est déterminée en additionnant la deuxième valeur de PO avec la puissance de transmission des intervalles de temps correspondant aux DL DPCH.

17. Procédé selon la revendication 11, dans lequel la puissance de transmission de chaque intervalle de temps de la deuxième partie est déterminée en additionnant la deuxième valeur de PO avec la puissance de transmission de l'un des trois intervalles de temps du DL DPCH.

18. Procédé selon la revendication 11, dans lequel la puissance de transmission de chaque intervalle de temps de la deuxième partie est déterminée en additionnant la deuxième valeur de PO avec une puissance de transmission moyenne du DL DPCH durant un certain intervalle de temps.
